# EUROPÄISCHE PATENTANMELDUNG

(11) **EP 3 840 194 A1**
(43) Veröffentlichungstag der Anmeldung: **23.06.2021**
(21) Anmeldenummer: 19216966.2
(22) Anmeldetag: 17.12.2019
(51) Int. Cl.: H02K 15/00, H02K 17/16

(54) **KÄFIGLÄUFER UND VERFAHREN ZUR DESSEN HERSTELLUNG**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft einen Leiterstab (9) eines Käfigläufers (8) einer Asynchronmaschine (5), der in seiner Längserstreckung an vorgegebenen Abschnitten (11) eine geringere Härte aufweist, insbesondere weichgeglüht ist.

## Beschreibung

Die Erfindung betrifft einen Leiterstab, einen Käfigläufer einer Asynchronmaschine, ein Verfahren zur Herstellung eines Käfigläufers von Asynchronmaschinen und die Verwendung derartiger Asynchronmaschinen.

Käfigläufer von Asynchronmaschinen sind mit einem Käfig aus Aluminium und/oder Kupfer ausgestattet. Um eine erhöhte Effizienz der Asynchronmaschine zu erhalten, wird insbesondere Kupfer eingesetzt. Dabei wurden Kupferstäbe in Nuten eines magnetisch leitfähigen Körpers axial eingeschoben, die an den beiden Stirnseiten eines magnetisch leitfähigen Körpers mit einem Kurzschlussring versehen werden. Um nun ein Schwingen dieser Leiterstäbe in den Nuten zu vermeiden, wurden diese Leiterstäbe mit einer sehr engen Passmaßtolerierung in Nuten des Käfigläufers unter hohem Kraftaufwand eingesetzt bzw. eingeschlagen, was u.a. zu hohen Fertigungszeiten eines derartigen Käfigläufers führt.

Durch die enge Passmaßtoleranz der Leiterstäbe zur Nut ist ein erhöhter Kraftaufwand zum Einbringen der Leiterstäbe erforderlich. Die Leiterstäbe werden üblicherweise axial eingehämmert, was zu vergleichsweise hohen Fertigungszeit eines Käfigläufers führt. Dabei muss jeder einzelne Leiterstab in seine jeweilige Nut eingehämmert werden. Außerdem besteht die Gefahr, dass die Leiterstäbe an der Nutwandung der Einzelbleche schaben und sich so Metallspäne bilden, die später in Betrieb der Asynchronmaschine den Betrieb blockieren oder zumindest beinträchtigen können.

Alternativ dazu wurden die Leiterstäbe mit einer leichten Spielpassung ausgeführt, damit die Leiterstäbe einfach ohne Kraftaufwand einsetzbar sind. Zur Verfestigung der Stäbe in den Nuten wird nunmehr das Blechpaket in einem dünnflüssigen Gießharz getränkt. Damit werden die vorhandenen Spalten zwischen Leiterstab und Innenwandung der Rotornut mit Harz befüllt. Nachteilig dabei ist, dass das Harz an den Nutseitenwänden haftet und sich aber unter Umständen löst und somit auch den Betrieb der Asynchronmaschine beeinträchtigen kann.

Die Leiterstäbe wurden somit bisher mit vergleichsweise hohem Aufwand mehr oder weniger zuverlässig in der Rotornut fixiert. Damit sind u.a. Schwingungen der Leiterstäbe und damit eine Beeinträchtigung des Betriebs einer Asynchronmaschine nicht ausgeschlossen.

Ebenso ist es bekannt, dass durch axiales Rollen am Außendurchmesser des Blechpakets eine leichte Verformung des Blechpakets im Nutbereich zu einer Verfestigung des Leiterstabes in der Nut führt. Dieser Aufwand ist aber ebenfalls sehr hoch. Außerdem wurden die Bleche am Außenbereich dabei plastisch verformt. Damit wird die Festigkeit des Rotorblechs und die Eignung für vergleichsweise hohe Drehzahl negativ beeinflusst.

In der Hybridtechnik, in der z.B. ein Kupferstab mit Aluminiumdruckgießen kombiniert ist, füllt der Kupferstab die Rotornut nur anteilig aus. Durch Druckgießen wird dabei der Rest der Nut mit Aluminium ausgespritzt, womit der Leiterstab in der Nut fixiert wird. Nachteil dabei ist, dass die Nut nun nicht komplett mit Kupfer ausgefüllt ist, das einen sehr hohen elektrischen Leitwert aufweist. Somit kann die angestrebte Effizienzklasse einer Asynchronmaschine nicht erreicht werden.

Ausgehend davon liegt der Erfindung die Aufgabe zugrunde, einen Käfigläufer einer Asynchronmaschine bereitzustellen, der in einfacher Art und Weise ein Schwingen der Leiterstäbe im Betrieb der Asynchronmaschine über einen hohen Drehzahlbereich der Asynchronmaschine verhindert und gleichzeitig einen vergleichsweise hohen Kupferfüllfaktor aufweist. Dabei soll die Herstellung des Käfigläufers einfach und für eine automatisierte Fertigung geeignet sein. Des Weiteren soll die Asynchronmaschine für einen viele unterschiedliche Anwendungszwecke geeignet sein, die hohe Drehzahlen und/oder hohes Drehmoment und/oder Lastwechsel erfordern.

Die Lösung der gestellten Aufgabe gelingt durch einen Leiterstab eines Käfigläufers einer Asynchronmaschine, der in seiner Längserstreckung an vorgegebenen Abschnitten eine geringere Härte aufweist, insbesondere weichgeglüht ist.

Die Lösung der gestellten Aufgabe gelingt auch durch ein Verfahren zur Herstellung eines Käfigläufers einer Asynchronmaschinen durch folgende Schritte:
- bereitstellen eines magnetisch leitfähigen Körpers, insbesondere eines Blechpakets mit am radial äußeren Rand angeordneten, im Wesentlichen axial verlaufenden Nuten,
- erfindungsgemäße Leiterstäbe, werden axial in die Nuten eingesetzt und weisen bezüglich des Querschnitts der jeweiligen Nut eine Spielpassung auf und weisen einen axialen Überstand der Leiterstäbe aus den Stirnseiten des magnetisch leitfähigen Körpers auf,
- axiales Stauchen der Leiterstäbe innerhalb der jeweiligen Nut, sodass im axialen Verlauf der Nut definierte Anlagepunkte zwischen dem Leiterstab und der Innenseite der Nut entstehen,
- gleichzeitiges oder anschließendes kontaktieren von Kurzschlussringen an den axialen Überständen der Leiterstäbe.

Die Lösung der gestellten Aufgabe gelingt auch durch einen Käfigläufer einer Asynchronmaschine, hergestellt nach dem erfindungsgemäßen Verfahren, wobei die Leiterstäbe in der Nut definierte Anlagepunkte aufweisen, um das Schwingungsverhalten des Käfigläufers im Betrieb zu optimieren.

Die Lösung der gestellten Aufgabe gelingt auch durch eine Asynchronmaschine mit einem erfindungsgemäßen Käfigläufer wobei die Asynchronmaschine ein reduziertes Schwingungsverhalten aufweist.

Die Lösung der gestellten Aufgabe gelingt auch durch Verwendung zumindest einer erfindungsgemäßen Asynchronmaschine mit einem erfindungsgemäßen Käfigläufer bei Antriebssystemen beispielsweise von Werkzeugmaschinen, der Nahrungsmittelindustrie, des Verkehrswesens, der chemischen Industrie.

Ein erfindungsgemäßer Leiterstab, insbesondere Kupferstab weist somit in seiner axialen Erstreckung einen oder mehrere Abschnitte auf, in der er vergleichsweise weich ist. Dies kann beispielsweise durch ein kurzzeitiges induktives Erwärmen oder ein Erwärmen durch eine Flamme oder andere Verfahren an dieser Stelle des Leiterstabs erfolgen. Vorteilhafterweise sind diese Verfahren bereits bei der Stabherstellung oder bzw. beim Ablängen der Leiterstäbe einsetzbar sind. Dies kurzzeitige Erwärmung kann aber auch erst nach dem Ablängen an den vorbestimmten Abschnitten/Stellen des Leiterstabes erfolgen.

Es ist jeweils dabei nur eine kurzzeitige Erwärmung über die Rekristallisationstemperatur erforderlich. Bei Leiterstäben aus Kupfer ist dies beispielsweise 750°C.

Damit erhält der Leiterstab an vorgebbaren Stellen seiner axialen Erstreckung Abschnitte mit geringerer Härte.

Bei dem Herstellverfahren mit Leiterstäben, die weichgeglühte Abschnitte aufweisen, kann nunmehr nach dem axialen Fügen der Leiterstäbe in den magnetisch leitfähigen Körper, durch ein axialen Druck auf die Stirnseite der Leiterstäbe eine Stauchung der jeweiligen Leiterstäbe in diesen weicheren Abschnitten erzielt werden. Da diese weicheren Abschnitte innerhalb der Nut des Käfigläufers liegen, bilden sich definierte Anlagepunkte des Leiterstabes an der Innenseite der Nut aus. Damit wird ein Schwingen des Leiterstabes oder der Leiterstäbe im Betrieb des Asynchronmaschine verhindern.

Durch diese Verformung wird das bisherige vergleichsweise geringe Passungsspiel des Leiterstabes in der Nut zumindest abschnittsweise ausgefüllt. Durch die Anlage des Leiterstabs an die Innenwandung der Nut werden nunmehr Schwingungen der Stäbe im Betrieb der Asynchronmaschine vermieden.

Der Leiterstab legt sich durch die Stauchung vorzugsweise dort an die Innenwandung der Nut an, wo die Spielpassung zwischen Leiterstab und Innenwandung herrscht und der weichere Abschnitt des Leiterstabes vorliegt.

Abhängig von den zu erzielenden Frequenzen der Schwingung können in der axialen Erstreckung des Leiterstabs ein oder mehrere dieser Abschnitte in den Leiterstab integriert bzw. eingebracht sein.

Ohne eine derartige Stauchung ergibt sich die sogenannte Grundschwingung f1 des Leiterstabs. Mit einer Stauchung ergibt sich die erste harmonische Schwingung 2*f1, mit zwei Stauchungen pro Leiterstab 3*f1 und sofort. Je nach axialer Länge des magnetisch leitfähigen Körpers wird eine oder mehrere Stauchungen pro Länge des Leiterstabes vorgesehen, um das Schwingen des Leiterstabs bezüglich seiner Eigenfrequenz durch den oder die zusätzlich geschaffenen Schwingungs-Knoten zu vermeiden. Die Eigenfrequenz des Leiterstabs liegt durch einen oder mehrere zusätzliche Knoten, also Anlagepunkte an der Innenwandung der Nut um das Doppelte oder ein Vielfaches davon höher als die Grundfrequenz und ist somit außerhalb der anregenden Frequenz im Betrieb der Asynchronmaschine.

Die Erfindung sowie weitere vorteilhafte Ausgestaltungen der Erfindung wurden anhand prinzipiell dargestellte Ausführungsbeispiele näher erläutert. Darin zeigen:
- FIG 1: einen Querschnitt eines magnetisch leitfähigen Körpers,
- FIG 2: einen Detailausschnitt der FIG 1,
- FIG 3: einen Leiterstab,
- FIG 4: eine Detaildarstellung eines Leiterstab in der Nut,
- FIG 5: einen Leiterstab, der gestaucht wurde,
- FIG 6: eine prinzipielle Darstellung eines Leiterstabs im magnetisch leitfähigen Körper,
- FIG 7: Detailansicht einer Nut-Anordnung,
- FIG 8: Nutanordnungen mit Welle,
- FIG 9: Detailansicht einer Nut-Anordnung mit Welle,
- FIG 10: Längsschnitt einer Asynchronmaschine.

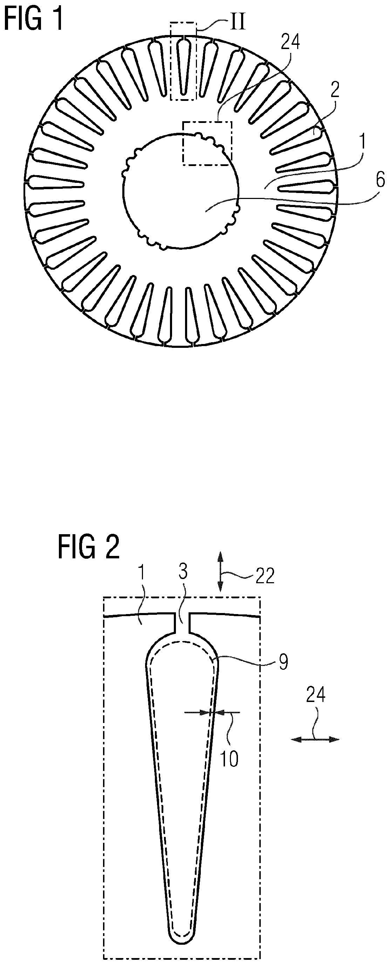

FIG 1 zeigt einen Querschnitt eines magnetisch leitfähigen Körpers 1, insbesondere eines Blechpakets mit am radial äußeren Rand befindlichen im Wesentlichen axial verlaufenden Nuten 2, die in dieser Ausführungsbeispiel teilgeöffnet dargestellt sind. Die Teilöffnung betrifft einen geringen Nutschlitz 3, der zu einem nicht näher dargestellten Luftspalt 4 eine Asynchronmaschine 5 weist. Des Weiteren ist eine Wellenbohrung 6 gezeigt, in die später eine Welle 7 drehfest mit dem Blechpaket des Käfigläufers 8 verbunden wird.

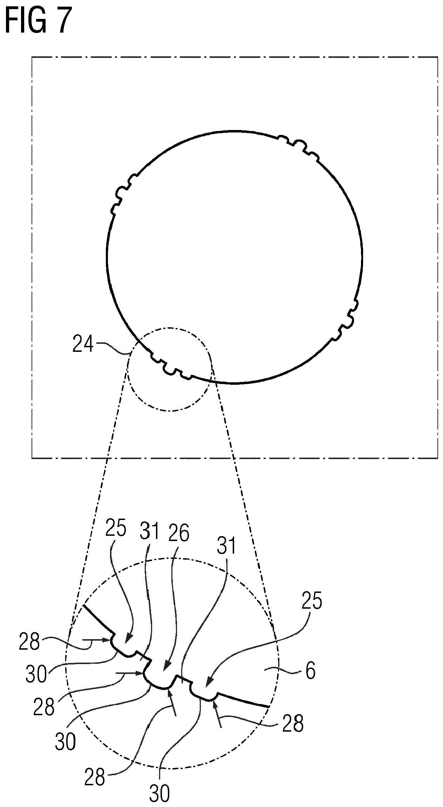

Dabei ist eine vorgebbare Anzahl und/oder von in der Form vorgebbaren Nut-Anordnungen 24 an der Innenseite, also der Wellenbohrung 6 des magnetisch leitfähigen Körpers 1, insbesondere des Blechpakets des Käfigläufers 8 angeordnet. Diese werden im weiteren Verlauf, insbesondere ab FIG 7 näher beschrieben.

FIG 2 zeigt eine Detaildarstellung einer Nut 2 mit einem in dieser Nut 2 befindlichen Leiterstab 9, der bezüglich des Querschnitts der Nut 2 in Umfangsrichtung 23 betrachtet zumindest abschnittsweise eine umfängliche Spielpassung 10 aufweist, derart, dass ein axiales Einsetzen des Leiterstabs 9 in die Nut 2 nahezu kraftlos erfolgen kann und dabei keine Spanabhebung an den Innenwandungen der Nut 2 erfolgt.

Als Spielpassung 10 ist dabei die Definition des ISO-Passsystems zugrunde gelegt. Danach lässt sich der Leiterstab 9 innerhalb der Nut 2 leicht bewegen oder verschieben, sogar noch mit der Hand. Entscheidend ist, dass durch die Stauchung der Leiterstäbe 9 an den vorbestimmten Abschnitten 12 sich Anlagebereiche 21 zwischen Innenwandung der Nut 2 und den Leiterstäben 9 ergeben.

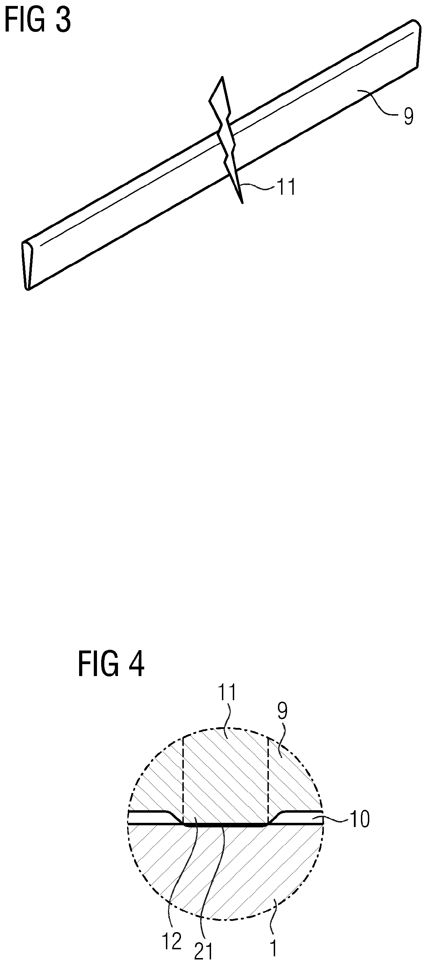

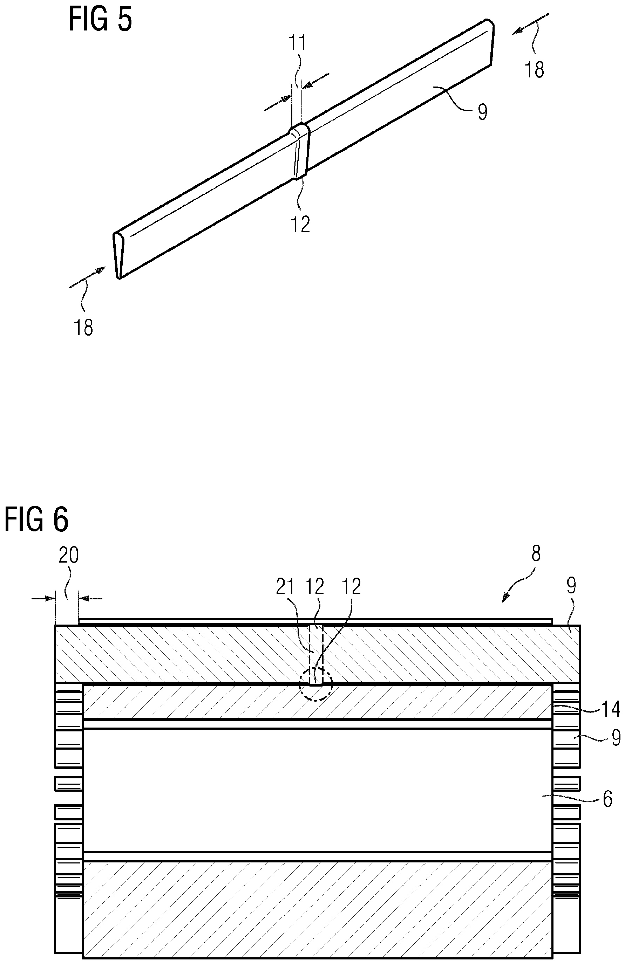

Ein derartiger Leiterstab 9 wurde an vorbestimmten, in der Längserstreckung befindlichen axialen Abschnitten 11 des Leiterstabes 9 weichgeglüht, so dass dort sich eine vergleichsweise geringe Härte einstellt. Durch diese geringe Härte kann nun wie in FIG 5 prinzipiell dargestellt, durch axial äußere Kräfte 18 der Leiterstab 9 gestaucht werden, so dass sich eine Verdickung 12 des Leiterstabes 9 in diesem Bereich einstellt. Durch diese Verdickung 12 ergibt sich die in FIG 4 in einer Detaildarstellung gezeigte Verkeilung und Spreizung des Leiterstabs 9 in der Nut 2.

Die Verdickung 12 des Leiterstabes 9 kann an einem axialen Abschnitt 11 vollumfänglich ausgebildet sein. Es ist aber auch möglich, dass einem axialen Abschnitt 11 eine Verdickung 12 nur in einzelnen Richtungen also in radialer Richtung 22 und/oder Umfangsrichtung 24 stattfindet. Entscheidend ist, dass sich definierte Anlagebereiche 21 zwischen Leiterstab 9 und Innenwandung der Nut 2 ausbilden. (siehe auch FIG 2).

Die Erfindung lässt sich für unterschiedlichste Nutformen bzw. Leiterstabquerschnitte wie Rundstab, Keilstab, L-Stab, Hochstab, tropfenförmiger Stab/Nut, und deren Kombinationen in Doppelkäfigläufern einsetzen.

Diese axiale Stauchung der Leiterstäbe 9 kann auch durch das Aufsetzen der Kurzschlussringe 13 auf die aus dem Blechpaket 1 ragenden axialen Überstände 20 der Leiterstäbe 9 erfolgen. Damit sind zwei Schritte - Stauchung und elektrische Kontaktierung der Leiterstäbe 9 mit dem Kurzschlussring 13 in einem Arbeitsgang möglich.

Bei der elektrischen Kontaktierung von Leiterstäben 9 mit dem Kurzschlussring 13 sind unterschiedlichste Möglichkeiten vorgesehen. Dies kann durch mechanische Pressung, Lötvorgänge, induktives oder elektrisches Erwärmen oder Kombinationen davon erfolgen.

Durch diese erfinderische Verkeilung/Spreizung der Leiterstäbe an vorgebbaren Abschnitten in der jeweiligen Nut 2 innerhalb des magnetisch leitfähigen Körpers werden Schwingungen der Leiterstäbe 9 im Betrieb einer Asynchronmaschinen 5 vermieden.

FIG 6 zeigt einen Käfigläufer 8 ohne Kurzschlussringen 13, mit axialen Überständen 20 der Leiterstäbe 9 an den Stirnseiten 14 des Blechpakets 1. Die Leiterstäbe 9 weisen in diesem Fall eine Verdickung 12 innerhalb des axialen Verlaufs in der Nut 2 aufgrund einer Stauchung auf. Damit werden Anlagebereiche 21 zwischen der Innenwandung der Nut 2 und dem Leiterstab 9 geschaffen. Der Kurschlussring 13 wird in einem folgenden Schritt aufgesetzt und elektrisch kontaktiert.

FIG 7 zeigt eine Detailansicht einer Nut-Anordnung 24 an der Wellenbohrung 6, die in dieser Ausführung eine Fädelnut 26 und zwei flankierenden Entlastungsnuten 25 aufweist. Diese Fädelnut 26 weist somit im Wesentlichen eine rechteckförmige Kontur auf, deren Ecken mit Radien 28 versehen sind. Es ist somit auch keine Halbrundnut, sondern es liegen zumindest zwei unterschiedliche Radien dieser Kontur vor. In den Ecken sind zwei kleinere Radien und in einem diese verbindenden Teilstück 30 ein größerer Radius.

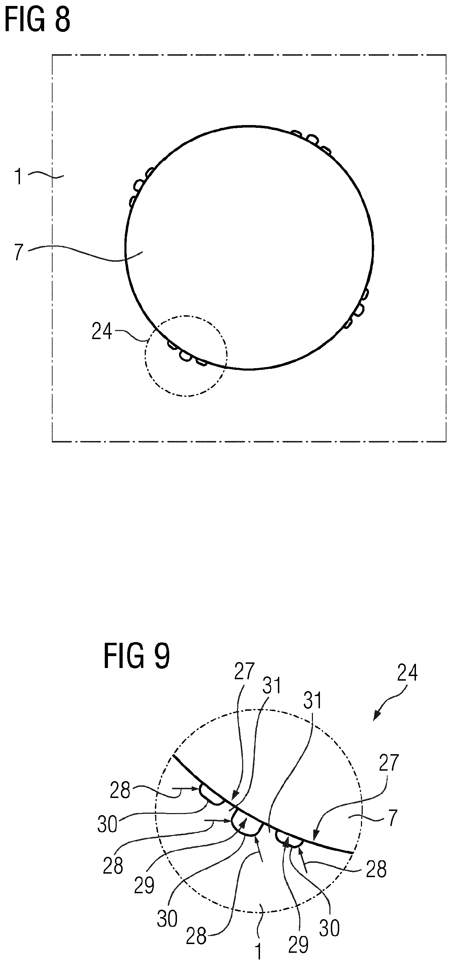

Diese Fädelnuten 26 dienen u.a. auch der Ausrichtung von Einzelblechen bei einer Paketierung des Blechpakets des Käfigläufers 8. Um aber auch bei vergleichsweise hohen Drehzahlen eines Asynchronmotors die Fliehkraftwirkungen des Käfigläufers 8 bei ausreichender Drehmomentenübertragung von dem Blechpaket des Käfigläufers 8 auf die Welle 7 zu gewährleisten, die ein hohes Übermaß im Blechpaket-Sitz auf der Welle 7 erfordern, sind die Fädelnuten 26 mit Entlastungsnuten 25 zu ergänzen. Nur mit Fädelnuten 26 allein besteht die Gefahr einer mechanischen Überlastung dieser Bleche in diesem Bereich. FIG 8 zeigt die Wellenbohrung 6 mit ihren Nut-Anordnungen 24, in welche Wellenbohrung 6 die Welle 7 eingesetzt ist.

FIG 9 zeigt in einer Detaildarstellung eine Nut-Anordnung 24 mit der Welle 7. Die Nut-Anordnung 24 ist dabei wie in FIG 7 ausgeführt. Dabei sind Formschlussbereiche 29 und Kontaktbereiche 27 vorhanden. Bei dem axialen Fügen der Welle 7 in die Wellenbohrung 6 führen auch die Stege 31, also die Zwischenstücke zwischen der Fädelnut 26 und den Entlastungsnuten 25 zu einer Glättung von Wellen oder Riefen oder Rillen, die durch die Herstellung der Welle 7 entstehen. Damit werden Formschlussbereiche 29 im Bereich der Fädelnuten 26 und Entlastungsnuten 25 geschaffen. Diese Formschlussbereiche 29 dienen auch als Sicherheit gegen ein Durchrutschen der Welle 7 innerhalb des Blechpaket 1 und sorgen so für ein verbessertes Drehmomentübertragungsverhalten.

Durch die Nut-Anordnungen 24, also die Kombinationen von Fädelnuten 26 mit Entlastungnuten 25 werden mechanische Beanspruchungen des Blechs, insbesondere bei hohem Übermaß im Blechpaket-Sitz auf der Welle 7 stark reduziert.

Vorteilhafterweise sind die Nut-Anordnung 24 an der Wellenbohrung 6 gleichmäßig verteilt, um eine ausreichende Verteilung des zu übertragenden Drehmoments zu erhalten.

Die Kontur der Fädelnut 26 und/oder der Entlastungsnuten 25 weist also zumindest abschnittsweise eine bogen- oder ellipsenbogenförmige Kontur auf. Damit reduzieren sich mechanische Spannungen in diesem Bereich, insbesondere wenn ein stark überhöhtes Übermaß von Blechpaket 1 und Welle 7 vorliegt, um die erforderliche Fliehkraftbeanspruchungen und hohes Drehmomentübertragungsverhalten zu gewährleisten.

Die Nuten 2 dienen der Aufnahme der Leiterstäbe 9. Diese Leiterstäbe 9 in den Nut 2 bilden durch elektromagnetische Wechselwirkung mit einem Wicklungssystem 16 eines Stators 19 ein Drehmoment aus. In der Nut-Anordnung 24 sind Fädelnuten 26 und Entlastungsnuten 25, die keinen Beitrag zur Drehmomentbildung, sondern lediglich einen Beitrag zur Drehmomentübertragung auf die Welle 7 leisten.

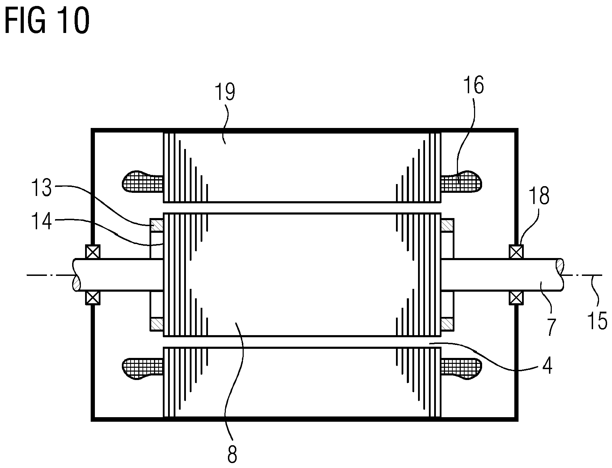

FIG 10 zeigt im prinzipiellen Längsschnitt ein Asynchronmaschine 5, mit einem erfindungsgemäße Käfigläufer 8. Durch elektromagnetische Wechselwirkung eines Wicklungssystems 16 im Stator 15 mit dem Käfigläufer 8 erfolgt eine Drehung der Welle 7 um eine Achse 15. Die Welle 7 ist dabei in Lagern 17 gestützt und mit dem Blechpaket 1 des Käfigläufers 8 drehfest verbunden.

Der Käfigläufer 8 zeigt in dieser Ausführung Kurzschlussring 13, die an der Stirnseite 14 des Blechpakets 1 anliegen. Der erfindungsgemäße Gedanke lässt sich selbstverständlich auch bei von der Stirnseite 14 beabstandeten Kurzschlussringen 13 umsetzen.

Der erfinderische Gedanke lässt sich auch für Läufer einsetzen, die Permanentmagnete und einen Kurzschlusskäfig in dem Läufer aufweisen.

Derartige Asynchronmaschinen 5 lassen sich im Nieder- und Hochspannungsbereich einsetzen. Einsatzbereiche sind dabei sowohl Antriebe im industriellen Umfeld als auch bei Fahrzeugantriebe. Dabei ist vorteilhaft, dass sich Leiterstabschwingungen auch bei hohen Drehzahlen und/oder hohen Drehmomenten der Asynchronmaschinen 5 nicht in der jeweiligen Verwendung negativ bemerkbar machen. So kann beispielsweise weiterhin eine hohe Oberflächengüte bei Werkstücken gewährleistet werden, die durch Werkzeugmaschinen mit erfindungsgemäßen Asynchronmaschinen hergestellt wurden.

## Patentansprüche

1. Leiterstab (9) eines Käfigläufers (8) einer Asynchronmaschine (5), der in seiner Längserstreckung an vorgegebenen Abschnitten (11) eine geringere Härte aufweist, insbesondere weichgeglüht ist.

2. Verfahren zur Herstellung eines Käfigläufers (8) einer Asynchronmaschinen (5) durch folgende Schritte:
- bereitstellen eines magnetisch leitfähigen Körpers (1), insbesondere eines Blechpakets mit am radial äußeren Rand angeordneten, im Wesentlichen axial verlaufenden Nuten (2),
- Leiterstäbe (9) nach Anspruch 1, die axial in die Nuten (2) eingesetzt werden und die bezüglich des Querschnitts der jeweiligen Nut (2) eine Spielpassung (10) aufweisen und einen axialen Überstand (20) der Leiterstäbe (9) aus den Stirnseiten (14) des magnetisch leitfähigen Körpers (1) aufweisen,
- axiales Stauchen der Leiterstäbe (9) innerhalb der jeweiligen Nut (2), sodass im axialen Verlauf der Nut (2) definierte Anlagepunkte zwischen dem Leiterstab (9) und der Innenseite der Nut (2) entstehen,
- gleichzeitiges oder anschließendes kontaktieren von Kurzschlussringen (13) an den axialen Überständen (20) der Leiterstäbe (9).

3. Käfigläufer (8) einer Asynchronmaschinen (5), hergestellt nach Anspruch 2, wobei die Leiterstäbe (9) in der Nut (2) definierte Anlagepunkte (21) aufweisen, um das Schwingungsverhalten des Käfigläufers (8) im Betrieb zu optimieren.

4. Asynchronmaschine (5) mit einem Käfigläufer (8) nach Anspruch 3, **dadurch gekennzeichnet, dass** die Asynchronmaschine (5) Mittel aufweist, die ein reduziertes Schwingungsverhalten bewirken.

5. Verwendung von zumindest einer Asynchronmaschine (5) nach Anspruch 4 bei Antriebssystemen beispielsweise von Werkzeugmaschinen, der Nahrungsmittelindustrie, des Verkehrswesens, der chemischen Industrie.
